# EUROPEAN PATENT SPECIFICATION

(11) **EP 3 492 628 B1**
(45) Date of publication and mention of the grant of the patent: **17.02.2021**
(21) Application number: 17833799.4
(22) Date of filing: 17.05.2017
(51) Int. Cl.: C25B 1/00, C25B 1/10, C25B 9/08, H01M 8/18

(54) **ELECTROLYTE AND ELECTROLYZER SYSTEM**
ELEKTROLYT SOWIE ELEKTROLYSEURSYSTEM
ÉLECTROLYTE ET SYSTÈME D'ÉLECTROLYSEUR

(30) Priority: 26.07.2016 JP 2016146800
(43) Date of publication of application: 05.06.2019
(73) Proprietor: Sumitomo Electric Industries, Ltd., Osaka-shi, Osaka 541-0041 (JP)
(72) Inventor: MORIUCHI, Kiyoaki, Osaka-shi Osaka 554-0024 (JP); NAKAHATA, Hideaki, Osaka-shi Osaka 554-0024 (JP); HASEGAWA, Katsuya, Osaka-shi Osaka 554-0024 (JP)
(74) Representative: Boult Wade Tennant LLP
(86) International application number: PCT/JP2017/018550
(87) International publication number: WO 2018/020788

(56) References cited:
- WO-A1-2015/019973
- WO-A1-2015/019974
- WO-A1-2016/017393
- JP-A- H01 316 481
- JP-A- H09 507 950
- JP-A- 2005 298 870
- JP-B- S4 638 745
- US-A1- 2004 191 623
- US-A1- 2015 017 494
- US-A1- 2016 013 506

## Description

### Technical Field

The present invention relates to an electrolyte, and an electrolyzer system.

### Background Art

Some storage battery systems carry out a battery reaction using an electrolyte. An example of the electrolyte used in such a storage battery system is an aqueous solution, such as an aqueous sulfuric acid solution, containing, as an active material, ions whose valence is changed by oxidation-reduction (paragraph 0023 of the specification of PTL 1, and PTL 2). WO 2015/019974 A1 relates to a redox flow battery. US 2016/013506 A1 relates to a redox flow battery. US 2015/017494 A1 relates to a redox flow battery for hydrogen generation. US 2004/191623 A1 relates to an electrolyte for a redox flow battery, and a redox flow battery.

### Citation List

### Patent Literature

PTL 1: Japanese Unexamined Patent Application Publication No. 2002-367657
PTL 2: Japanese Unexamined Patent Application Publication No. 2007-311209

### Summary of Invention

An electrolyte according to the present disclosure is according to claim 1.

An electrolyzer system according to the present disclosure is according to claim 3.

### Brief Description of Drawing

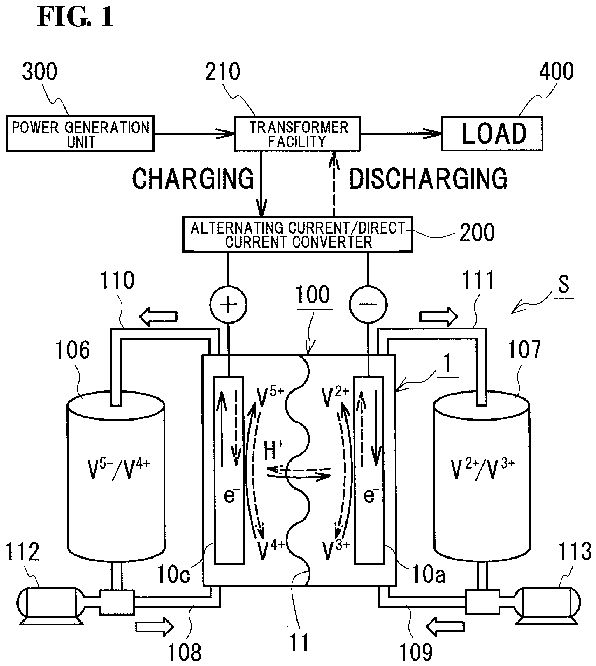

[Fig. 1] Figure 1 is an explanatory view illustrating a schematic structure of an electrolyzer system according to an embodiment and an operating principle of a battery.

### Description of Embodiments

### [Technical Problem]

In recent years, hydrogen, which is used as, for example, fuel for fuel cells, has attracted attention as an example of clean energy because hydrogen does not contain carbon and thus a carbon-containing gas (CO₂) is not discharged even after combustion. Hydrogen can be produced by, for example, electrolysis of water. It is conceivable that natural energy power generation is utilized for an energy source of the electrolysis. It is desired to efficiently generate a gas containing elemental hydrogen by utilizing this electrolysis from an electrolyte, in particular, an electrolyte containing, as an active material, ions whose valence is changed by oxidation-reduction.

In view of this, an object is to provide an electrolyte capable of efficiently generating a gas.

Another object is to provide an electrolyte for an electrolyzer, the electrolyte including the electrolyte described above.

Still another object is to provide an electrolyzer system including the above electrolyte for an electrolyzer.

### [Advantageous Effects of the Present Disclosure]

According to the electrolyte of the present disclosure and the electrolyte for an electrolyzer of the present disclosure, a gas can be efficiently generated.

According to the electrolyzer system of the present disclosure, the amount of gas generated is large.

### [Description of Embodiments of the Present Invention]

In order to accelerate gas generation due to electrolysis, the inventors of the present invention have particularly focused on electrolytes and conducted studies. As a result, it has been found that when an electrolyte has high concentrations of specific types of element ions, the generation of a gas containing elemental hydrogen (hereinafter also referred to as a "H-containing gas"), such as hydrogen or hydrogen sulfide, is accelerated. The present invention is based on the finding. Hereinafter, embodiments of the present invention and reference examples will be listed and described.

(1) An electrolyte according to a reference example is an electrolyte in which a total concentration of ions of elements of groups 1 to 8 and ions of elements of groups 13 to 16 in the fifth period of the periodic table, and ions of elements of groups 1, 2, and 4 to 8 and ions of elements of groups 13 to 15 in the sixth period of the periodic table, the ions being additive element ions involved in gas generation, is more than 610 mg/L.

The electrolyte described above has a high total content of both ions of specific elements in the fifth period and ions of specific elements in the sixth period. Therefore, when the electrolyte is used as an electrolyte for an electrolyzer of an electrolyzer system, a gas can be effectively generated, in particular, the generation of a H-containing gas in the negative electrode can be accelerated. Accordingly, the electrolyte can contribute to the construction of an electrolyzer system in which the amount of gas generated by electrolysis is large.

(2) An electrolyte according to an embodiment of the present invention is according to claim 1.

The electrolyte described above optionally has a high content of barium ions, which are ions of the element of group 2 in the sixth period of the periodic table. Therefore, when the electrolyte is used as an electrolyte for an electrolyzer of an electrolyzer system, the generation of a gas, in particular, the generation of a H-containing gas in the negative electrode can be accelerated. Accordingly, the electrolyte can contribute to the construction of an electrolyzer system in which the amount of gas generated by electrolysis is large.

The electrolyte described above optionally has a high content of molybdenum ions, which are ions of the element of group 6 in the fifth period of the periodic table. Therefore, when the electrolyte is used as an electrolyte for an electrolyzer of an electrolyzer system, the generation of a gas, in particular, the generation of a H-containing gas in the negative electrode can be accelerated. Accordingly, the electrolyte can contribute to the construction of an electrolyzer system in which the amount of gas generated by electrolysis is large.

The electrolyte described above optionally has a high content of tungsten ions, which are ions of the element of group 6 in the sixth period of the periodic table. Therefore, when the electrolyte is used as an electrolyte for an electrolyzer of an electrolyzer system, the generation of a gas, in particular, the generation of a H-containing gas in the negative electrode can be accelerated. Accordingly, the electrolyte can contribute to the construction of an electrolyzer system in which the amount of gas generated by electrolysis is large.

The electrolyte described above optionally has a high content of rhenium ions, which are ions of the element of group 7 in the sixth period of the periodic table. Therefore, when the electrolyte is used as an electrolyte for an electrolyzer of an electrolyzer system, the generation of a gas, in particular, the generation of a H-containing gas in the negative electrode can be accelerated. Accordingly, the electrolyte can contribute to the construction of an electrolyzer system in which the amount of gas generated by electrolysis is large.

The electrolyte described above optionally has a high content of indium ions, which are ions of the element of group 13 in the fifth period of the periodic table. Therefore, when the electrolyte is used as an electrolyte for an electrolyzer of an electrolyzer system, the generation of a gas, in particular, the generation of a H-containing gas in the negative electrode can be accelerated. Accordingly, the electrolyte can contribute to the construction of an electrolyzer system in which the amount of gas generated by electrolysis is large.

The electrolyte described above optionally has a high content of antimony ions, which are ions of the element of group 15 in the fifth period of the periodic table. Therefore, when the electrolyte is used as an electrolyte for an electrolyzer of an electrolyzer system, the generation of a gas, in particular, the generation of a H-containing gas in the negative electrode can be accelerated. Accordingly, the electrolyte, the electrolyte can contribute to the construction of an electrolyzer system in which the amount of gas generated by electrolysis is large.

The electrolyte described above optionally has a high content of bismuth ions, which are ions of the element of group 15 in the sixth period of the periodic table. Therefore, when the electrolyte is used as an electrolyte for an electrolyzer of an electrolyzer system, the generation of a gas, in particular, the generation of a H-containing gas in the negative electrode can be accelerated. Accordingly, the electrolyte can contribute to the construction of an electrolyzer system in which the amount of gas generated by electrolysis is large.
(9) In an embodiment of the electrolyte, a concentration of vanadium ions is 1 mol/L or more and 3 mol/L or less, a concentration of free sulfuric acid is 1 mol/L or more and 4 mol/L or less, a concentration of phosphoric acid is 1.0 × 10⁻⁴ mol/L or more and 7.1 × 10⁻¹ mol/L or less, a concentration of ammonium is 20 mg/L or less, and a concentration of silicon is 40 mg/L or less.

The embodiment described above relates to an all-vanadium-based electrolyte that contains vanadium ions as an active material and mainly includes a solution containing sulfuric acid and phosphoric acid. Since the electrolyte according to the embodiment has a specific composition, the following various advantages can be obtained. 1. The gas generation due to electrolysis is easily accelerated; 2. Precipitation of compounds containing an active material element, such as ammonium-vanadium compounds, can be suppressed; and 3. For example, gelation of the electrolyte due to silicon can be suppressed. Accordingly, the embodiment described above contributes to the construction of an electrolyzer system in which the amount of gas generated by electrolysis is further increased, and precipitation of precipitates containing an active material element derived from active material element ions can also be suppressed.

(10) An electrolyte for an electrolyzer described herein includes the electrolyte according to (1)above.

The electrolyte for an electrolyzer includes the above-described electrolyte capable of efficiently generating a gas. Therefore, when the electrolyte is used as an electrolyte for an electrolyzer of an electrolyzer system, a gas can be efficiently generated, and, in particular, the generation of a H-containing gas in the negative electrode can be accelerated. Accordingly, the electrolyte for an electrolyzer can contribute to the construction of an electrolyzer system in which the amount of gas generated by electrolysis is large.

(11) An electrolyzer system according to an embodiment of the present invention is according to claim 3.

Since the electrolyzer system includes the above-described electrolyte, the amount of gas generated by electrolysis is large.

### [Detailed Description of Embodiments of the Present Invention]

Hereinafter, an electrolyte, an electrolyte for an electrolyzer, (reference example) and an electrolyzer system according to embodiments of the present invention will be described in more detail. First, an electrolyzer system according to an embodiment will be described with reference to Fig. 1, and subsequently, electrolytes (electrolytes for electrolyzers) will be described in detail. In Fig. 1, ions illustrated in a positive electrolyte tank 106 and a negative electrolyte tank 107 are examples of ionic species contained as an active material in an electrolyte, the solid-line arrows indicate charging, and the dashed-line arrows indicate discharging.

### (Overview of electrolyzer system)

An electrolyzer system S according to an embodiment includes an electrolyzer 1 and an electrolyte (an electrolyte for an electrolyzer) and generates a gas (in particular, an H-containing gas that contains hydrogen) from the electrolyte by utilizing electrolysis. This H-containing gas can be used as, for example, fuel for fuel cells. The electrolyzer 1 includes two electrodes that are brought into contact with the electrolyte, and the electrolyte is electrolyzed by applying a voltage between the electrodes.

Here, a circulation mechanism (described later) for suppling the electrolyte to the electrolyzer 1 is connected to the electrolyzer 1. Furthermore, the electrolyzer 1 is connected through, for example, an alternating current/direct current converter 200, a transformer facility 210, and the like, to a power generation unit 300 and a load 400 such as a power system or a consumer. Specifically, the electrolyzer 1 (electrolyzer system S) can be used as a secondary battery (secondary battery (flow battery) system) which performs charging by using the power generation unit 300 as a power supply source and performs discharging to the load 400 as a power supply target. Examples of the power generation unit 300 include solar photovoltaic power generators, wind power generators, and other general power plants. For the electrolysis in this electrolyzer system S, the power generation by the power generation unit 300 can be utilized as an energy source.

### (Basic configuration of electrolyzer)

The electrolyzer 1 includes, as a main component, a cell 100 including a positive electrode 10c, a negative electrode 10a, and a membrane 11 disposed between the two electrodes 10c and 10a.

The electrolyzer 1 is typically used in the form of a cell stack in which a plurality of cells 100 are stacked. The cell stack typically has a configuration using a frame assembly that includes a bipolar plate (not shown) having a positive electrode 10c on one surface thereof and a negative electrode 10a on the other surface thereof and a frame body (not shown) formed on an outer periphery of the bipolar plate. A flow path such as a groove through which an electrolyte flows may be formed in the bipolar plate. The frame body has liquid supply holes through which electrolytes for electrodes are supplied to the electrodes disposed on the bipolar plate and liquid drainage holes through which the electrolytes are drained. By stacking a plurality of frame assemblies, the liquid supply holes and the liquid drainage holes form flow ducts for the electrolytes. The ducts are connected to pipes 108 to 111, which will be described later. The cell stack is formed by repeatedly stacking a bipolar plate of a frame assembly, a positive electrode 10c, a membrane 11, a negative electrode 10a, a bipolar plate of another frame assembly, and so on in this order.

### (Circulation mechanism)

The circulation mechanism includes a positive electrolyte tank 106 that stores a positive electrolyte to be circulated and supplied to the positive electrode 10c, a negative electrolyte tank 107 that stores a negative electrolyte to be circulated and supplied to the negative electrode 10a, pipes 108 and 110 that connect the positive electrolyte tank 106 and the electrolyzer 1, pipes 109 and 111 that connect the negative electrolyte tank 107 and the electrolyzer 1, and pumps 112 and 113 that are respectively provided on the pipes 108 and 109 on the upstream side (supply side).

In the electrolyzer system S, by using a positive electrolyte circulation path including the positive electrolyte tank 106 and the pipes 108 and 110 and a negative electrolyte circulation path including the negative electrolyte tank 107 and the pipes 109 and 111, the positive electrolyte and the negative electrolyte are circulated and supplied to the positive electrode 10c and negative electrode 10a, respectively. As a result of the circulation and supply, charging and discharging can also be performed in response to valence change reactions of active material ions in the electrolytes for the electrodes. In this case, a configuration of a known electrolyte flow system can be appropriately used as the basic configuration of the electrolyzer system S. One feature of the electrolyzer system S according to the embodiment lies in that the electrolyzer system S includes, as an electrolyte, any one of electrolytes (electrolytes for electrolyzers) according to Embodiment 1 to Embodiment 9 described below.

### (Electrolyte)

The electrolytes according to embodiments are ionic solutions that contain ions serving as active materials and are common to existing electrolytes in this respect. One feature of the electrolytes according to the embodiments lies in that the electrolytes contain specific additive element ions involved in gas generation due to electrolysis in large amounts. First, the specific additive element ions will be described.

- Additive element ions
- Reference Example 1

An electrolyte according to Reference Example 1 has a total concentration of ions of more than 610 mg/L, the ions being ions of elements of groups 1 to 8 and ions of elements of groups 13 to 16 in the fifth period of the periodic table, and ions of elements of groups 1, 2, and 4 to 8 and ions of elements of groups 13 to 15 in the sixth period of the periodic table, when the electrolyte contains these ions as additive element ions involved in gas generation. Since the content (total concentration) of these additive element ions satisfies the above range, a gas can be efficiently generated when the electrolyzer system S is operated using the electrolyte according to Embodiment 1. In particular, the generation of H-containing gases that contain hydrogen, such as hydrogen and hydrogen sulfide, in the negative electrode can be effectively accelerated.

The elements of groups 1 to 8 in the fifth period of the periodic table are rubidium (Rb, group 1), strontium (Sr, group 2), yttrium (Y, group 3), zirconium (Zr, group 4), niobium (Nb, group 5), molybdenum (Mo, group 6), technetium (Tc, group 7), and ruthenium (Ru, group 8).

The elements of groups 13 to 16 in the fifth period of the periodic table are indium (In, group 13), tin (Sn, group 14), antimony (Sb, group 15), and tellurium (Te, group 16).

The elements of groups 1, 2, and 4 to 8 in the sixth period of the periodic table are cesium (Cs, group 1), barium (Ba, group 2), hafnium (Hf, group 4), tantalum (Ta, group 5), tungsten (W, group 6), rhenium (Re, group 7), and osmium (Os, group 8).

The elements of groups 13 to 15 in the sixth period of the periodic table are thallium (Tl, group 13), lead (Pb, group 14), and bismuth (Bi, group 15).

Hereinafter, these elements may be collectively referred to as a "gas generation additive element group".

With an increase in the total concentration, gas generation can be further accelerated, which is preferable. The total concentration is preferably 620 mg/L or more, further 630 mg/L or more, and more preferably 640 mg/L or more. As shown in the test example which will be described later, it is considered to be preferable that, with regard to at least an unused electrolyte, the total concentration satisfies the range described above. The upper limit of the total concentration may be practically about 2,400 mg/L or less.

The elements of the gas generation additive element group are elements belonging to close groups in the same period or elements belonging to the same group and thus are considered to exhibit similar properties, in particular, in this case, the property of accelerating the generation of a gas such as a H-containing gas.

As described above, with an increase in the total concentration, gas generation can be further accelerated. However, the electrolyzer system S can perform charging and discharging as a battery to some extent. That is, this electrolyzer system S can also be used as, for example, a secondary battery. For example, when the total concentration is more than 610 mg/L and less than 640 mg/L, further, more than 610 mg/L and 630 mg/L or less, and in particular, more than 610 mg/L and 625 mg/L or less, the electrolyzer system S can also be used as a secondary battery. Specifically, when the total concentration is more than 610 mg/L and less than 640 mg/L, the electrolyte according to Embodiment 1 can be used both for gas generation and a battery reaction. When the total concentration is 640 mg/L or more, the electrolyte according to Embodiment 1 can be suitably used for gas generation.

It has been found that even when the total concentration of ions of the elements of the gas generation additive element group is low, regarding ions of specific elements among the ions of the elements of the gas generation additive element group, excessively high contents of the ions of the specific elements easily cause gas generation. In view of this, regarding ions of the specific elements of the gas generation additive element group, the contents of the ions are specified as described below.

### •• Embodiment 2

An electrolyte according to Embodiment 2 has a barium ion concentration of more than 20 mg/L when the electrolyte contains barium ions as additive element ions involved in gas generation. Since the content of barium ions satisfies the above range, gas generation can be accelerated when the electrolyzer system S is operated using the electrolyte according to Embodiment 2. In particular, the generation of a H-containing gas, in particular, hydrogen sulfide gas, in the negative electrode can be effectively accelerated.

With an increase in the concentration of barium ions, gas generation can be further accelerated, which is preferable. The concentration of barium ions is preferably 22 mg/L or more, further 23 mg/L or more, and more preferably 24 mg/L or more. As shown in the test example which will be described later, it is considered to be preferable that, with regard to at least an unused electrolyte, the concentration of barium ions satisfies the above range. The upper limit of the concentration of barium ions may be practically about 340 mg/L or less.

As described above, with an increase in the concentration of barium ions, gas generation can be further accelerated. However, the electrolyzer system S can perform charging and discharging as a battery to some extent. That is, this electrolyzer system S can also be used as, for example, a secondary battery. For example, when the concentration of barium ions is more than 20 mg/L and less than 24 mg/L, further, more than 20 mg/L and 23 mg/L or less, and in particular, more than 20 mg/L and 22 mg/L or less, the electrolyzer system S can also be used as a secondary battery. Specifically, when the concentration of barium ions is more than 20 mg/L and less than 24 mg/L, the electrolyte according to Embodiment 2 can be used both for gas generation and a battery reaction. When the concentration of barium ions is 24 mg/L or more, the electrolyte according to Embodiment 2 can be suitably used for gas generation.

### •• Embodiment 3

An electrolyte according to Embodiment 3 has a molybdenum ion concentration of more than 510 mg/L when the electrolyte contains molybdenum ions as additive element ions involved in gas generation. Since the content of molybdenum ions satisfies the above range, gas generation can be accelerated when the electrolyzer system S is operated using the electrolyte according to Embodiment 3. In particular, the generation of a H-containing gas, in particular, hydrogen sulfide gas, in the negative electrode can be effectively accelerated.

With an increase in the concentration of molybdenum ions, gas generation can be further accelerated, which is preferable. The concentration of molybdenum ions is preferably 520 mg/L or more, further 530 mg/L or more, and more preferably 540 mg/L or more. As shown in the test example which will be described later, it is considered to be preferable that, with regard to at least an unused electrolyte, the concentration of molybdenum ions satisfies the above range. The upper limit of the concentration of molybdenum ions may be practically about 2,000 mg/L or less.

As described above, with an increase in the concentration of molybdenum ions, gas generation can be further accelerated. However, the electrolyzer system S can perform charging and discharging as a battery to some extent. That is, this electrolyzer system S can also be used as, for example, a secondary battery. For example, when the concentration of molybdenum ions is more than 510 mg/L and less than 540 mg/L, further, more than 510 mg/L and 530 mg/L or less, and in particular, more than 510 mg/L and 520 mg/L or less, the electrolyzer system S can also be used as a secondary battery. Specifically, when the concentration of molybdenum ions is more than 510 mg/L and less than 540 mg/L, the electrolyte according to Embodiment 3 can be used both for gas generation and a battery reaction. When the concentration of molybdenum ions is 540 mg/L or more, the electrolyte according to Embodiment 3 can be suitably used for gas generation.

### •• Embodiment 4

An electrolyte according to Embodiment 4 has a tungsten ion concentration of more than 30 mg/L when the electrolyte contains tungsten ions as additive element ions involved in gas generation. Since the content of tungsten ions satisfies the above range, gas generation can be accelerated when the electrolyzer system S is operated using the electrolyte according to Embodiment 4. In particular, the generation of a H-containing gas, in particular, hydrogen sulfide gas, in the negative electrode can be effectively accelerated.

With an increase in the concentration of tungsten ions, gas generation can be further accelerated, which is preferable. The concentration of tungsten ions is preferably 33 mg/L or more, further 35 mg/L or more, and more preferably 37 mg/L or more. As shown in the test example which will be described later, it is considered to be preferable that, with regard to at least an unused electrolyte, the concentration of tungsten ions satisfies the above range. The upper limit of the concentration of tungsten ions may be practically about 490 mg/L or less.

As described above, with an increase in the concentration of tungsten ions, gas generation can be further accelerated. However, the electrolyzer system S can perform charging and discharging as a battery to some extent. That is, this electrolyzer system S can also be used as, for example, a secondary battery. For example, when the concentration of tungsten ions is more than 30 mg/L and less than 37 mg/L, further, more than 30 mg/L and 35 mg/L or less, and in particular, more than 30 mg/L and 34 mg/L or less, the electrolyzer system S can also be used as a secondary battery. Specifically, when the concentration of tungsten ions is more than 30 mg/L and less than 37 mg/L, the electrolyte according to Embodiment 4 can be used both for gas generation and a battery reaction. When the concentration of tungsten ions is 37 mg/L or more, the electrolyte according to Embodiment 4 can be suitably used for gas generation.

### •• Embodiment 5

An electrolyte according to Embodiment 5 has a rhenium ion concentration of more than 5 mg/L when the electrolyte contains rhenium ions as additive element ions involved in gas generation. Since the content of rhenium ions satisfies the above range, gas generation can be accelerated when the electrolyzer system S is operated using the electrolyte according to Embodiment 5. In particular, the generation of a H-containing gas, in particular, hydrogen gas, in the negative electrode can be effectively accelerated.

With an increase in the concentration of rhenium ions, gas generation can be further accelerated, which is preferable. The concentration of rhenium ions is preferably 5.5 mg/L or more, further 5.7 mg/L or more, and more preferably 5.8 mg/L or more. As shown in the test example which will be described later, it is considered to be preferable that, with regard to at least an unused electrolyte, the concentration of rhenium ions satisfies the above range. The upper limit of the concentration of rhenium ions may be practically about 260 mg/L or less.

As described above, with an increase in the concentration of rhenium ions, gas generation can be further accelerated. However, the electrolyzer system S can perform charging and discharging as a battery to some extent. That is, this electrolyzer system S can also be used as, for example, a secondary battery. For example, when the concentration of rhenium ions is more than 5 mg/L and less than 5.8 mg/L, further, more than 5 mg/L and 5.7 mg/L or less, and in particular, more than 5 mg/L and 5.5 mg/L or less, the electrolyzer system S can also be used as a secondary battery. Specifically, when the concentration of rhenium ions is more than 5 mg/L and less than 5.8 mg/L, the electrolyte according to Embodiment 5 can be used both for gas generation and a battery reaction. When the concentration of rhenium ions is 5.8 mg/L or more, the electrolyte according to Embodiment 5 can be suitably used for gas generation.

### •• Embodiment 6

An electrolyte according to Embodiment 6 has an indium ion concentration of more than 5 mg/L when the electrolyte contains indium ions as additive element ions involved in gas generation. Since the content of indium ions satisfies the above range, gas generation can be accelerated when the electrolyzer system S is operated using the electrolyte according to Embodiment 6. In particular, the generation of a H-containing gas, in particular, hydrogen gas, in the negative electrode can be effectively accelerated.

With an increase in the concentration of indium ions, gas generation can be further accelerated, which is preferable. The concentration of indium ions is preferably 5.5 mg/L or more, further 5.7 mg/L or more, and more preferably 5.8 mg/L or more. As shown in the test example which will be described later, it is considered to be preferable that, with regard to at least an unused electrolyte, the concentration of indium ions satisfies the above range. The upper limit of the concentration of indium ions may be practically about 440 mg/L or less.

As described above, with an increase in the concentration of indium ions, gas generation can be further accelerated. However, the electrolyzer system S can perform charging and discharging as a battery to some extent. That is, this electrolyzer system S can also be used as, for example, a secondary battery. For example, when the concentration of indium ions is more than 5 mg/L and less than 5.8 mg/L, further, more than 5 mg/L and 5.7 mg/L or less, and in particular, more than 5 mg/L and 5.6 mg/L or less, the electrolyzer system S can also be used as a secondary battery. Specifically, when the concentration of indium ions is more than 5 mg/L and less than 5.8 mg/L, the electrolyte according to Embodiment 6 can be used both for gas generation and a battery reaction. When the concentration of indium ions is 5.8 mg/L or more, the electrolyte according to Embodiment 6 can be suitably used for gas generation.

### • • Embodiment 7

An electrolyte according to Embodiment 7 has an antimony ion concentration of more than 10 mg/L when the electrolyte contains antimony ions as additive element ions involved in gas generation. Since the content of antimony ions satisfies the above range, gas generation can be accelerated when the electrolyzer system S is operated using the electrolyte according to Embodiment 7. In particular, the generation of a H-containing gas, in particular, hydrogen gas, in the negative electrode can be effectively accelerated.

With an increase in the concentration of antimony ions, gas generation can be further accelerated, which is preferable. The concentration of antimony ions is preferably 11 mg/L or more, further 13 mg/L or more, and more preferably 14 mg/L or more. As shown in the test example which will be described later, it is considered to be preferable that, with regard to at least an unused electrolyte, the concentration of antimony ions satisfies the above range. The upper limit of the concentration of antimony ions may be practically about 490 mg/L or less.

As described above, with an increase in the concentration of antimony ions, gas generation can be further accelerated. However, the electrolyzer system S can perform charging and discharging as a battery to some extent. That is, this electrolyzer system S can also be used as, for example, a secondary battery. For example, when the concentration of antimony ions is more than 10 mg/L and less than 14 mg/L, further, more than 10 mg/L and 13 mg/L or less, and in particular, more than 10 mg/L and 12 mg/L or less, the electrolyzer system S can also be used as a secondary battery. Specifically, when the concentration of antimony ions is more than 10 mg/L and less than 14 mg/L, the electrolyte according to Embodiment 7 can be used both for gas generation and a battery reaction. When the concentration of antimony ions is 14 mg/L or more, the electrolyte according to Embodiment 7 can be suitably used for gas generation.

### • • Embodiment 8

An electrolyte according to Embodiment 8 has a bismuth ion concentration of more than 20 mg/L when the electrolyte contains bismuth ions as additive element ions involved in gas generation. Since the content of bismuth ions satisfies the above range, gas generation can be accelerated when the electrolyzer system S is operated using the electrolyte according to Embodiment 8. In particular, the generation of a H-containing gas, in particular, hydrogen gas, in the negative electrode can be effectively accelerated.

With an increase in the concentration of bismuth ions, gas generation can be further accelerated, which is preferable. The concentration of bismuth ions is preferably 22 mg/L or more, further 24 mg/L or more, and more preferably 25 mg/L or more. As shown in the test example which will be described later, it is considered to be preferable that, with regard to at least an unused electrolyte, the concentration of bismuth ions satisfies the above range. The upper limit of the concentration of bismuth ions may be practically about 525 mg/L or less.

As described above, with an increase in the concentration of bismuth ions, gas generation can be further accelerated. However, the electrolyzer system S can perform charging and discharging as a battery to some extent. That is, this electrolyzer system S can also be used as, for example, a secondary battery. For example, when the concentration of bismuth ions is more than 20 mg/L and less than 25 mg/L, further, more than 20 mg/L and 24 mg/L or less, and in particular, more than 20 mg/L and 23 mg/L or less, the electrolyzer system S can also be used as a secondary battery. Specifically, when the concentration of bismuth ions is more than 20 mg/L and less than 25 mg/L, the electrolyte according to Embodiment 8 can be used both for gas generation and a battery reaction. When the concentration of bismuth ions is 25 mg/L or more, the electrolyte according to Embodiment 8 can be suitably used for gas generation.

### • • Embodiment 9

An electrolyte according to Embodiment 9 satisfies all the conditions of Embodiment 2 to Embodiment 8 described above. When the electrolyzer system S is operated using the electrolyte according to Embodiment 9, the generation of a gas, in particular, the generation of a H-containing gas in the negative electrode can be more effectively accelerated.

### • Active material

The electrolyte according to an embodiment can contain various active materials. Examples of the electrolyte include an all-vanadium-based electrolyte containing vanadium ions as an active material for both electrodes (refer to Fig. 1), an iron-chromium-based electrolyte containing iron ions as a positive electrode active material and chromium ions as a negative electrode active material, a manganese-titanium-based electrolyte (two-separate-electrolyte type) containing manganese ions as a positive electrode active material and titanium ions as a negative electrode active material, and a manganese-titanium-based electrolyte (one-common-electrolyte type) containing manganese ions and titanium ions for both electrodes. In particular, the all-vanadium-type electrolyte is preferable because a gas is easily generated.

In the case where the electrolyte according to an embodiment is an all-vanadium-based electrolyte, the concentration of vanadium ions in each of the positive electrolyte and the negative electrolyte is preferably 1 mol/L or more and 3 mol/L or less, 1.2 mol/L or more and 2.5 mol/L or less, and more preferably 1.5 mol/L or more and 1.9 mol/L or less. The effect thereof will be described later.

In the case where the electrolyte according to an embodiment is an all-vanadium-based electrolyte, vanadium ions preferably have an average valence of 3.3 or more and 3.7 or less, and further, 3.4 or more and 3.6 or less. In this case, gas generation due to electrolysis is easily accelerated. In the case where this electrolyte is used in a secondary battery as described above, a good balance of valences in two electrodes is achieved, the battery reaction can be conducted satisfactorily, and good battery characteristics, such as battery efficiency and energy density, are obtained.

### • Solvent and others

The electrolyte according to an embodiment may be an acid solution containing the active material, in particular, an aqueous acid solution containing the active material. The acid solution may contain, for example, at least one acid or acid salt selected from sulfuric acid (H₂SO₄), K₂SO₄, Na₂SO₄, phosphoric acid (H₃PO₄), H₄P₂O₇, K₂HPO₄, Na₃PO₄, K₃PO₄, nitric acid (HNO₃), KNO₃, hydrochloric acid (HCl), and NaNO₃. Alternatively, the electrolyte may be an organic acid solution.

In the case where the electrolyte according to an embodiment is an all-vanadium-based electrolyte which is a sulfuric acid solution containing phosphoric acid, preferably, the concentration of vanadium ions satisfies the specific range described above, the concentration of free sulfuric acid is 1 mol/L or more and 4 mol/L or less, the concentration of phosphoric acid is 1.0 × 10⁻⁴ mol/L or more and 7.1 × 10⁻¹ mol/L or less, the concentration of ammonium is 20 mg/L or less, and the concentration of silicon (Si) is 40 mg/L or less.

When the concentration of vanadium ions and the concentration of free sulfuric acid are in the ranges described above, an electrolyte having the good balance of valences can be provided.

In the combination of the concentration of vanadium ions, the concentration of free sulfuric acid, and the concentration of phosphoric acid that satisfy the specific ranges described above, precipitates containing the active material element, such as vanadium compounds, are unlikely to precipitate, and good battery performance can be maintained over a long period of time.

When the concentration of ammonium is in the specific range described above, precipitation of ammonium-vanadium compounds among the vanadium compounds is easily suppressed.

When the concentration of silicon is in the specific range described above, the occurrence of a phenomenon that can adversely affect the membrane 11 can be suppressed.

In this embodiment, in addition to the effect of accelerating the generation of a gas derived from additive element ions, a reduction in the generation of precipitates derived from active material element ions can also be achieved. When the electrolyte is used in a secondary battery as described above, the battery reaction can be satisfactorily conducted.

The concentration of free sulfuric acid is more preferably 1.5 mol/L or more and 3.5 mol/L or less. The concentration of phosphoric acid is more preferably 1.0 × 10⁻³ mol/L or more and 3.5 × 10⁻¹ mol/L or less. The concentration of ammonium is more preferably 10 mg/L or less. The concentration of silicon is more preferably 30 mg/L or less. In order to decrease the concentration of ammonium and the concentration of silicon, a known method such as filtration using a filter (refer to, for example, PTL 1) can be used.

### (Use)

The electrolyzer system S according to an embodiment can be used as an electrolyzer system for which an efficient production of hydrogen is desired in order to utilize hydrogen energy. The electrolyzer system S according to an embodiment can be used as a storage battery, with respect to natural energy power generation, such as solar photovoltaic power generation or wind power generation, for the purpose of stabilizing fluctuation of power output, storing generated power during oversupply, leveling load, and the like. The electrolyzer system S according to an embodiment can be provided in a general power plant and used as a storage battery as countermeasures against momentary voltage drop/power failure and for the purpose of leveling load. The electrolytes and the electrolytes for electrolyzers according to Embodiment 1 to Embodiment 9 can be used in the electrolyzer system described above.

### [Test Example 1]

Various electrolytes were prepared, and a charging and discharging test was performed by circulating and supplying each of the electrolytes to an electrolyzer (a flow battery in this test) to examine the state of gas generation.

In this test, an electrolyzer system including, as an electrolyzer, a cell stack in which a plurality of cells were stacked and a circulation mechanism for circulating and supplying electrolytes to the cell stack was constructed (refer to Fig. 1).

Each of the cells of the cell stack included electrodes having an electrode area of 500 cm² and made of carbon felt, a membrane, and a frame assembly.

This electrolyzer system has an output capacity of 1 kW × 5 hours.

The electrolytes prepared above had different concentrations (mg/L) of elements specified in groups 1 to 8 and groups 13 to 16 in the fifth period of the periodic table, and groups 1, 2, and 4 to 8 and groups 13 to 15 in the sixth period of the periodic table, as shown in Table 1. The concentrations were determined by component analysis using an ICP mass spectrometer (manufactured by Agilent Technologies, Inc., Agilent 7700x ICP-MS) before the charging and discharging test, which will be described below. The electrolytes prepared in this test were aqueous sulfuric acid solutions containing vanadium ions as an active material for both electrodes, that is, all-vanadium-based electrolytes. The amount of electrolyte prepared for each sample was 175 liters for the positive electrolyte and 175 liters for the negative electrolyte (350 liters in total for the positive and negative electrodes). The electrolytes of the individual samples contained the following components in common.

### Concentrations in electrolyte (common to all samples)

- Concentration of vanadium ions: 1.7 mol/L
- Average valence of vanadium ions: 3.5
- Concentration of free sulfuric acid: 2.0 mol/L
- Concentration of phosphoric acid: 0.14 mol/L (1.4 × 10⁻¹ mol/L)
- Concentration of ammonium: 20 mg/L or less
- Concentration of silicon: 40 mg/L or less

The prepared electrolyte of each of the samples was circulated and supplied to the electrolyzer prepared above, and a charging and discharging test was performed under the following conditions. Here, a gas generated in the negative electrode during charging and discharging was collected to analyze the components. A hydrogen generation rate and a hydrogen sulfide generation rate were examined to thereby examine the state of gas generation. When the hydrogen generation rate was less than 10 cc/h/m , it was evaluated that the generation did not occur. When the hydrogen generation rate was 10 cc/h/m² or more, it was evaluated that the generation occurred. When the hydrogen sulfide generation rate was less than 5.0 × 10⁻³ cc/h/m², it was evaluated that the generation did not occur. When the hydrogen sulfide generation rate was 5.0 × 10⁻³ cc/h/m² or more, it was evaluated that the generation occurred. Table 1 shows the evaluation results and the values of the generation rates (cc/h/m²). In addition, a charging and discharging test was performed under the following conditions by using water instead of the electrolyte without using the electrolyte. According to the results, the hydrogen generation rate was less than 1 cc/h/m² (the generation did not occur), and the hydrogen sulfide generation rate was less than 0.5 × 10⁻³ cc/h/m² (the generation did not occur).

### (Charge and discharge conditions)

Charge and discharge method: continuous charging and discharging at constant current
Current density: 70 (mA/cm2)
End-of-charge voltage: 1.55 (V)/cell
End-of-discharge voltage: 1.00 (V)/cell
Temperature: room temperature (25°C)

**[Table 1]**

| Sample No. | | 1-1 | 1-2 | 1-3 | 1-4 | 1-5 | 1-6 | 1-7 | 1-8 | 1-101 | 1-102 | 1-103 |
|---|---|---|---|---|---|---|---|---|---|---|---|---|
| Period 5 | Rb | 0.5 | 0.3 | 0.5 | 0.4 | 0.7 | 0.5 | 0.3 | 0.3 | 0.4 | 0.5 | 1 |
| | Sr | 0.2 | 0.3 | 0.2 | 0.1 | 0.5 | 0.4 | 0.2 | 0.5 | 0.3 | 0.5 | 0.5 |
| | Y | 0.1 | 0.2 | 0.1 | 0.5 | 0.6 | 0.5 | 0.3 | 0.3 | 0.4 | 0.5 | 0.2 |
| | Zr | 1 | 1.5 | 0.5 | 1 | 1.2 | 0.5 | 1.5 | 0.5 | 0.8 | 1 | 0.5 |
| | Nb | 0.8 | 0.5 | 0.3 | 0.8 | 0.2 | 0.4 | 0.5 | 0.4 | 0.5 | 1 | 0.5 |
| | Mo | 515 | 150 | 120 | 250 | 405 | 80 | 10 | 488 | 310 | 508 | 490 |
| | Tc | 0.1 | 0.2 | 0.1 | 0,3 | 0.1 | 0.2 | 0.1 | 0.3 | 0.2 | 0.5 | 0.5 |
| | Ru | 0.2 | 0.1 | 0.1 | 0.2 | 0.1 | 0.1 | 0.2 | 0.3 | 0.2 | 0.5 | 0.5 |
| | In | 3 | 6 | 1 | 0.5 | 1 | 1 | 0.5 | 4 | 2 | 4.5 | 2 |
| | Sn | 4 | 1 | 2 | 1 | 4 | 5 | 1 | 21 | 1 | 3 | 1 |
| | Sb | 2 | 1 | 11 | 1 | 2 | 5 | 1 | 7 | 5 | 9 | 1 |
| | Te | 1 | 0.5 | 0.5 | 1.2 | 1 | 0.8 | 1 | 2 | 1.5 | 1 | 0.5 |
| Period 6 | Cs | 0.5 | 0.4 | 0.5 | 0,3 | 0.7 | 0.4 | 0.5 | 0.5 | 0.5 | 1 | 0.5 |
| | Ba | 5 | 2 | 10 | 21 | 5 | 10 | 3 | 10 | 15 | 18 | 5 |
| | Hf | 0.5 | 0.4 | 0.2 | 0.5 | 0.4 | 0.6 | 0.3 | 0.5 | 0.5 | 1 | 0.5 |
| | Ta | 0.1 | 0.1 | 0.1 | 0.1 | 0.1 | 0.1 | 0.1 | 0.1 | 0.1 | 0.1 | 0.1 |
| | W | 5 | 3 | 5 | 2 | 32 | 8 | 5 | 20 | 25 | 28 | 10 |
| | Re | 1 | 1 | 2 | 1 | 1 | 6 | 1 | 3 | 3 | 4.5 | 1 |
| | Os | 0.3 | 0.2 | 0.1 | 0.3 | 0.4 | 0.5 | 0.1 | 0.8 | 0.3 | 0.5 | 0.2 |
| | Tl | 1 | 1 | 0.5 | 0.5 | 1 | 1 | 0.5 | 1 | 0.5 | 1 | 1 |
| | Pb | 2 | 3 | 8 | 2 | 15 | 10 | 15 | 40 | 5 | 7 | 1 |
| | Bi | 5 | 2 | 3 | 10 | 1 | 10 | 21 | 12 | 10 | 18 | 2 |
| Total | | 548.3 | 174.7 | 165.7 | 294.7 | 473 | 141 | 63.1 | 612.5 | 382.2 | 609.1 | 519.5 |
| Hydrogen generation rate | | Occur | Occur | Occur | Not occur | Not occur | Occur | Occur | Occur | Not occur Not occur | | Not occur |
| | | 10.6 | 11.0 | 13.5 | 6.6 | 5.1 | 13.2 | 14.8 | 10.5 | 4.0 9.5 | | 8.5 |
| Hydrogen sulfide generation rate | | Occur | Not occur | Not occur | Occur | Occur | Not occur | Not occur | Occur | Not occur Not occur | | Not occur |
| | | 7.0 × 10⁻³ | 1.3 × 10⁻³ | 1.4 × 10⁻³ | 6.5 × 10⁻³ | 5.8 × 10⁻³ | 0.9 × 10⁻³ | 0.7 × 10⁻³ | 5.1 × 10⁻³ | 3.5 × 10⁻³ | 4.9 × 10⁻³ | 4.0 × 10⁻³ |

As shown in Table 1, in which Sample No. 1-8 is a reference example, when the additive element ions contained in the electrolytes satisfy at least one of (1) to (8) described below, gas generation can be accelerated during repeated charging-discharging operations. In this test, the generation of hydrogen and hydrogen sulfide in the negative electrode can be effectively accelerated.
(1) The total concentration of ions of elements of groups 1 to 8 and ions of elements of groups 13 to 16 in the fifth period of the periodic table, and ions of elements of groups 1, 2, and 4 to 8 and ions of elements of groups 13 to 15 in the sixth period of the periodic table is more than 610 mg/L.
(2) The concentration of barium ions is more than 20 mg/L.
(3) The concentration of molybdenum ions is more than 510 mg/L.
(4) The concentration of tungsten ions is more than 30 mg/L.
(5) The concentration of rhenium ions is more than 5 mg/L.
(6) The concentration of indium ions is more than 5 mg/L.
(7) The concentration of antimony ions is more than 10 mg/L.
(8) The concentration of bismuth ions is more than 20 mg/L.

It is found that, in contrast, when none of (1) to (8) described above are satisfied, a gas such as hydrogen or hydrogen sulfide is unlikely to generate.

This test showed that gas generation could be accelerated by treating the element ions specified in (1) to (8) above as additive element ions involved in gas generation due to electrolysis, and adjusting the concentrations of the additive element ions to the specific ranges. In particular, this test shows that the concentrations of ions of the elements of the gas generation additive element group in the electrolytes are preferably adjusted to the specific ranges before operation of the electrolyzer system (in an unused state). From this point of view, it is considered to be preferable to adjust the concentrations within a short period of use after the start of operation of the electrolyzer system (for example, within about 100 cycles in a battery with a capacity of 10 kWh or more, though the period depends on the capacity of the electrolyzer or the like).

The present invention is not limited to the examples described above but is defined by the appended claims. For example, in the test example described above, the type and concentration of active material, the type of acid and acid concentration of the electrolyte for each electrode, the amount of the electrolyte, the size of the electrodes, the capacity of the electrolyzer, and the like can be appropriately changed.

### Reference Signs List

S electrolyzer system 1 electrolyzer
100 cell
10c positive electrode 10a negative electrode 11 membrane
106 positive electrolyte tank 107 negative electrolyte tank
108 to 111 pipe 112, 113 pump
200 alternating current/direct current converter 210 transformer facility 300 power generation unit
400 load

## Claims

1. An electrolyte, wherein the electrolyte is an acid solution containing vanadium ions, wherein either:
a concentration of barium ions is more than 20 mg/L and less than 340 mg/L, or
a concentration of molybdenum ions is more than 510 mg/L and less than 2000 mg/L, or
a concentration of tungsten ions is more than 30 mg/L and less than 490 mg/L, or
a concentration of rhenium ions is more than 5 mg/L and less than 260 mg/L, or
a concentration of indium ions is more than 5 mg/L and less than 440 mg/L, or
a concentration of antimony ions is more than 10 mg/L and less than 490 mg/L, or
a concentration of bismuth ions is more than 20 mg/L and less than 525 mg/L,
and wherein the electrolyte is suitable to be used as an all-vanadium-based electrolyte with the vanadium ions being an active material for both electrodes and the electrolyte being used in the electrolytic generation of hydrogen or hydrogen sulfide.

2. The electrolyte according to Claim 1,
wherein a concentration of vanadium ions is 1 mol/L or more and 3 mol/L or less,
a concentration of free sulfuric acid is 1 mol/L or more and 4 mol/L or less,
a concentration of phosphoric acid is 1.0×10⁻⁴ mol/L or more and 7.1 × 10⁻¹ mol/L or less,
a concentration of ammonium is 20 mg/L or less, and
a concentration of silicon is 40 mg/L or less.

3. An electrolyzer system comprising an electrolyzer, wherein the eletrolyzer comprises the electrolyte according to Claim 1 or Claim 2.

## Patentansprüche

1. Elektrolyt, wobei der Elektrolyt eine saure Lösung ist, die Vanadium-Ionen enthält, wobei entweder
eine Konzentration von Barium-Ionen mehr als 20 mg/L und weniger als 340 mg/L beträgt oder
eine Konzentration von Molybdän-Ionen mehr als 510 mg/L und weniger als 2000 mg/L beträgt oder
eine Konzentration von Wolfram-Ionen mehr als 30 mg/L und weniger als 490 mg/L beträgt oder
eine Konzentration von Rhenium-Ionen mehr als 5 mg/L und weniger als 260 mg/L beträgt oder
eine Konzentration von Indium-Ionen mehr als 5 mg/L und weniger als 440 mg/L beträgt oder
eine Konzentration von Antimon-Ionen mehr als 10 mg/L und weniger als 490 mg/L beträgt oder
eine Konzentration von Bismut-Ionen mehr als 20 mg/L und weniger als 525 mg/L beträgt
und wobei der Elektrolyt geeignet ist, als ein vollständig auf Vanadium basierender Elektrolyt verwendet zu werden, wobei die Vanadium-Ionen ein aktives Material für beide Elektroden sind und der Elektrolyt bei der elektrolytischen Erzeugung von Wasserstoff oder Schwefelwasserstoff verwendet wird.

2. Elektrolyt gemäß Anspruch 1,
wobei eine Konzentration von Vanadium-Ionen 1 mol/L oder mehr und 3 mol/L oder weniger beträgt,
eine Konzentration von freier Schwefelsäure 1 mol/L oder mehr und 4 mol/L oder weniger beträgt,
eine Konzentration von Phosphorsäure 1,0x10⁻⁴ mol/L oder mehr und
7,1x10⁻¹ mol/L oder weniger beträgt,
eine Konzentration von Ammonium 20 mg/L oder weniger beträgt und
eine Konzentration von Silizium 40 mg/L oder weniger beträgt.

3. Elektrolyseursystem, umfassend einen Elektrolyseur, wobei der Elektrolyseur den Elektrolyten gemäß Anspruch 1 oder Anspruch 2 umfasst.

## Revendications

1. Electrolyte, dans lequel l'électrolyte est une solution acide contenant des ions vanadium, dans lequel soit :
une concentration en ions baryum est supérieure à 20 mg/l et inférieure à 340 mg/l, soit
une concentration en ions molybdène est supérieure à 510 mg/l et inférieure à 2 000 mg/l, soit
une concentration en ions tungstène est supérieure à 30 mg/l et inférieure à 490 mg/l, soit
une concentration en ions rhénium est supérieure à 5 mg/l et inférieure à 260 mg/l, soit
une concentration en ions indium est supérieure à 5 mg/l et inférieure à 440 mg/l, soit
une concentration en ions antimoine est supérieure à 10 mg/l et inférieure à 490 mg/l, soit
une concentration en ions bismuth est supérieure à 20 mg/l et inférieure à 525 mg/l,
et dans lequel l'électrolyte est utilisable comme un électrolyte complètement à base de vanadium avec les ions vanadium étant une matière active pour les deux électrodes et l'électrolyte étant utilisé dans la production électrolytique d'hydrogène ou de sulfure d'hydrogène.

2. Electrolyte selon la revendication 1, dans lequel
une concentration en ions vanadium est de 1 mol/l ou supérieure et de 3 mol/l ou inférieure,
une concentration en acide sulfurique libre est de 1 mol/l ou supérieure et de 4 mol/l ou inférieure,
une concentration en acide phosphorique est de 1,0 x 10⁻⁴ mol/l ou supérieure et de 7,1 x 10⁻¹ mol/l ou inférieure,
une concentration en ammonium est de 20 mg/l ou inférieure, et
une concentration en silicium est de 40 mg/l ou inférieure.

3. Système d'électrolyseur comprenant un électrolyseur, dans lequel l'électrolyseur comprend l'électrolyte selon la revendication 1 ou revendication 2.
